Europäisches Patentamt
European Patent Office
Office européen des brevets

Numéro de publication: 0 367 638
A1

# DEMANDE DE BREVET EUROPEEN

Numéro de dépôt: 89402436.3

Date de dépôt: 07.09.89

Int. Cl.5 C08L 95/00

Priorité: 23.09.88 FR 8812455

Date de publication de la demande: 09.05.90 Bulletin 90/19

Etats contractants désignés: AT BE CH DE ES GB GR IT LI LU NL SE

Demandeur: SOCIETE CHIMIQUE DE LA ROUTE
5, avenue Morane Saulnier
F-78140 Velizy(FR)

Inventeur: Meunier, Marc
23, rue du Laos
F-75015 Paris(FR)

Mandataire: Casalonga, Axel et al
BUREAU D.A. CASALONGA - JOSSE
Morassistrasse 8
D-8000 München 5(DE)

## Emulsion ou dispersion aqueuse à teneur élevée en bitume.

Emulsion ou dispersion cationique aqueuse de bitume comprenant : (I) le liant, contenant (a) le bitume, (b) le polymère, (c) le fluxant (solvant ou diluant) et, (II) le milieu aqueux contenant (d) un émulsifiant, (e) un acide et (f) un sel alcalin ou alcalino-terreux, dans laquelle la teneur en bitume est supérieure à 72% et de préférence égale ou supérieure à 80% en poids du poids total de l'émulsion ou de la dispersion, l'émulsion comprend des copolymères choisis parmi les copolymères styrène-butadiène-styrène, les copolymères éthylène-acétate de vinyle et leur mélange, la teneur en copolymère est inférieure à 0,5% en poids du poids du liant et on utilise moins de 0,5% en poids et de préférence de 0,1 à 0,15% en poids d'émulsifiant cationique du type amine du poids total de l'émulsion.

Cette émulsion à forte teneur de bitume présente une bonne finesse de micelles, une bonne adhésivité, une rupture rapide et la possibilité de pouvoir être appliquée sans coulures à une température extérieure positive.

EP 0 367 638 A1

## EMULSION OU DISPERSION AQUEUSE A TENEUR ELEVEE EN BITUME

L'invention a pour objet une émulsion ou dispersion aqueuse de bitume contenant plus de 72% en poids de bitume quelles que soient sa nature et ses caractéristiques.

Le bitume est utilisé depuis longtemps comme enduit ou produit d'étanchéité, notamment dans l'industrie routière, en raison de son faible coût et de ses qualités d'adhérence et de résistance.

Cependant, ses propriétés rhéologiques et mécaniques laissent à désirer. On a cherché à améliorer ces propriétés par incorporation au bitume de divers polymères ou élastomères.

Pour obtenir un bitume ayant des propriétés mécaniques et rhéologiques améliorées, il fallait incorporer le polymère au bitume en une quantité suffisante pour que le rapport en poids polymère/bitume soit supérieur à 1,5% en poids. Ainsi, le brevet français 2.376.188 enseigne un procédé de préparation de bitume/polymère consistant à mélanger 80 à 98% en poids de bitume et 2 à 20% en poids d'un copolymère bloc styrène/butadiène, mélange auquel on ajoute 0,1 à 3% de soufre.

Pour permettre l'épandage des liants pour enduits à base de bitume, il faut les rendre fluide, soit sous forme de solution par addition de fluxants (solvants ou diluants) provenant de la distillation du pétrole ou de la houille, soit sous forme d'émulsion par addition d'eau.

Les mélanges de bitume et de fluxants connus sous le nom de liants d'enduisage anhydres, sont répandus sur le sol à température élevée en général comprise entre 120 °C et 160 °C, alors que les émulsions aqueuses de bitume le sont à une température inférieure à la température d'ébullition de l'eau, c'est-à-dire en-dessous de 100 °C, ce qui est un de leurs avantages.

Un autre avantage des émulsions à base de bitume est dû au fait qu'elles contiennent très peu de solvant, par conséquent elles ne sont pas polluantes.

Les émulsions de bitume connues contiennent au minimum environ 30% d'eau et une quantité de bitume ne dépassant pas 70 à 72% en poids du poids total de l'émulsion.

Avec une teneur en eau inférieure à 30% en poids, les émulsions connues sont trop visqueuses pour pouvoir être répandues dans de bonnes conditions.

Cependant, le transport de 30% en poids d'eau présente un inconvénient économique important.

On a découvert que l'incorporation d'une quantité de polymères nettement inférieure à 1,5% en poids et de préférence de 0,2 à 0,5% en poids du poids du liant en combinaison avec un émulsifiant approprié, permettait d'abaisser suffisamment la viscosité des émulsions pour permettre de diminuer la teneur en eau nettement en-dessous de 30% en poids et d'augmenter d'autant la teneur en liant tout en permettant un répandage satisfaisant.

L'invention a pour objet une émulsion ou dispersion aqueuse de bitume à teneur élevée en bitume. On entend par teneur élevée en bitume une teneur en bitume supérieure à 72% en poids, avantageusement supérieure à 75% en poids, plus avantageusement supérieure à 79% en poids et de préférence supérieure ou égale à 80% en poids du poids total de l'émulsion ou de la suspension.

On utilise de préférence un bitume dont la pénétrabilité à l'aiguille à la température de 25 °C, selon la norme française NF T 66-004 de décembre 1986, est inférieure à 350 et de préférence comprise entre 80 et 300.

L'invention a également pour objet une émulsion ou suspension de bitume à teneur élevée en bitume contenant moins de 1,5% de polymère, avantageusement moins de 0,5% de polymère et de préférence entre 0,2 et 0,5% en poids de polymère du poids du liant. Le liant constitue la phase ou le milieu organique de l'émulsion ou de la dispersion, comprenant le bitume, le polymère, et si on le désire le fluxant et/ou le solvant et le diluant.

L'invention a également pour objet une émulsion ou une dispersion de bitume à teneur élevée de bitume, contenant en plus des quantités de bitume et de polymères susmentionnées, un émulsifiant cationique en une quantité de 0,02 à 1%, avantageusement en une quantité inférieure à 0,5% et de préférence de 0,10 à 0,15% en poids du poids total de l'émulsion. Le poids de la phase aqueuse est inférieur à 28%, avantageusement inférieur à 21% et de préférence égal ou inférieur à 20% du poids total de l'émulsion, le poids de la phase aqueuse constituant la différence entre le poids total de l'émulsion ou de la dispersion et le poids du liant.

Un autre objet de l'invention est constitué par le procédé de préparation de cette émulsion aqueuse de bitume.

D'autres objets de l'invention apparaîtront à la lecture de la description et des exemples qui suivent.

L'émulsion conforme à l'invention est essentiellement caractérisée par le fait qu'elle est obtenue en incorporant dans un bitume des polymères de préférence choisis parmi les copolymères styrène-butadiène, les copolymères éthylène-acétate de vinyle (EVA) et leurs mélanges. Les polymères peuvent être dissous

dans un fluxant (solvant ou diluant). Le mélange bitume copolymères, plus éventuellement le fluxant, constitue la phase organique de l'émulsion. Cette phase organique est chauffée au moins à 125-130 °C et on y ajoute une phase aqueuse chauffée au moins à 30 °C et contenant un émulsifiant, un acide, de préférence HCl et éventuellement un sel alcalin ou alcalino-terreux, et de préférence le chlorure de calcium.

Le fluxant peut comprendre des coupes pétrolières, des huiles de houille ou leur mélange.

Les copolymères styrène-butadiène et leurs dérivés sont connus en eux-mêmes et sont en particulier des élastomères de synthèse obtenus par polymérisation.

Ces copolymères peuvent être linéaires ou ramifiés ou encore être réticulés, par exemple par réticulation entre des chaînes de polymères linéaires et d'autres chaînes linéaires ou ramifiées.

Ils peuvent se présenter sous forme de copolymères séquencés du type styrène-butadiène-styrène (SBS) présentant des extrémités styréniques ou encore avoir une extrémité styrénique et une extrémité butadiénique libres. D'autres peuvent avoir une structure réticulée (SBR) formée à partir d'une association en étoile où les chaînes de polystyrène sont liées entre elles, généralement par quatre.

Cette structure réticulée peut éventuellement être supprimée par ramollissement du copolymère sous l'action de températures supérieures à la température de transition vitreuse, ou encore être détruite par dissolution dans un solvant organique. Cependant, cette structure réticulée peut se reformer en tout ou en partie dans le milieu utilisé conformément à l'invention dès que la température est redescendue à une valeur inférieure à celle du point de ramollissement du copolymère ou dès que le milieu solvant s'est évaporé.

Cette réversibilité de la réticulation est l'une des caractéristiques importantes de ces élastomères mise en oeuvre par l'invention.

Les copolymères styrène-butadiène préférés présentent un poids moléculaire compris entre 50.000 et 500.000.

Les copolymères éthylène-acétate de vinyle présentent de préférence des teneurs en acétate de vinyle de 5 à 40%.

L'une des formes de réalisation particulièrement préférée consiste à utiliser un mélange de copolymères à structure linéaire et à structure non linéaire et/ou à structure réticulée (ces derniers pouvant comporter les chaînes linéaires réticulées avec des chaînes non linéaires) afin d'assurer la continuité des propriétés, quelles que soient la température et la miscibilité de ces polymères avec le liant bitumineux.

Selon un mode de réalisation, les polymères sont utilisés sous forme de solution-mère. Pour préparer la solution-mère, on incorpore des polymères dans le milieu solvant en une proportion de 1 à 20 parties en poids de polymères et de préférence de 10 à 20 parties en poids de polymères pour 80 à 90 parties en poids de milieu solvant.

On utilise comme émulsifiants un ou plusieurs émulsifiants cationiques du type amine choisis parmi les mono-amines, les diamines, les polyamines, les amido-amines, les oxydes de telles amines, les produits de réaction de ces composés avec l'oxyde d'éthylène et/ou de propylène, les sels d'ammonium quaternaires, les imidazolines et leurs mélanges.

Parmi les émulsifiants ci-dessus, on cite plus particulièrement les diamines, les polyamines et les amido-amines de formule (I), (II) et (III) :

$R\text{-}(CO)_p\text{-}NH\text{-}(C_mH_{2m})\text{-}NH_2$ (I)

$R\text{-}(CO)_p\text{-}NH\text{-}(C_mH_{2m}\text{-}NH)q\text{-}(C_nH_{2n})\text{-}NH_2$ (II)

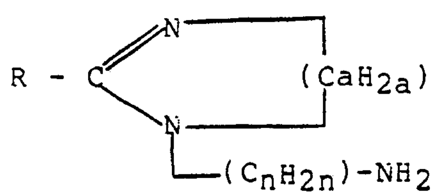 (III)

et les composés d'ammonium quaternaires de formule : $(R_1)_r\text{-}\ {}^{\oplus}N\ \text{-}\ (R_2)_s\ \text{-}\ Y^{\ominus}$ (IV)

Dans ces formules, R est un radical alkyle ou alkényle en $C_8$-$C_{22}$ et de préférence en $C_{12}$-$C_{18}$,

les $R_1$, identiques ou différents, désignent des radicaux aliphatiques en $C_6$-$C_{22}$, éventuellement substitués par un ou plusieurs groupements fonctionnels, et notamment des radicaux alkyle ou alkényle en $C_8$-$C_{20}$ ou un radical benzyle,

les $R_2$, identiques ou différents, désignent des radicaux alkyle en $C_1$-$C_6$, éventuellement hydroxylés, notamment méthyle, éthyle, propyle, hydroxyéthyle, hydroxypropyle,

$Y^{\ominus}$ désigne un anion d'acide minéral ou organique et en particulier un chlorure, sulfate, acétate ou formiate,

a est un nombre entier de 2 à 10 et de préférence de 2 à 4.
m et n sont des nombres entiers de 1 à 8, avantageusement de 1 à 6 et de préférence de 2 à 4,
p désigne 0 ou 1,
q représente un nombre entier de 1 à 6, avantageusement de 1 à 3,
r désigne le nombre 1, 2 ou 3,
s est un nombre égal à (4-r).

Les agents émulsifiants préférés ont les formules suivantes :

$R_3$ - NH - $(CH_2)_3$-$NH_2$ (V)

$R_3$ - NH - $[(CH_2)_3\text{-}NH]_r\text{-}(C_nH_{2n})\text{-}NH_2$ (VI)

où $R_3$ désigne un radical alkyle ou alkényle en $C_{12}$-$C_{18}$ ou en $C_{13}$-$C_{15}$, ainsi que les radicaux oléyle, stéaryle, et les radicaux provenant des acides gras dérivés du suif, des huiles de coco et de palmiste;
r et n ayant les significations sus-indiquées.

La quantité de l'émulsifiant est de 0,02 à 1%, avantageusement inférieure à 0,5% et de préférence de 0,10 à 0,15% en poids du poids total de l'émulsion.

La quantité HCl est telle que le pH de l'émulsion soit acide et de préférence qu'il soit compris entre 1,5 et 5.

On utilise habituellement de 0,1 à 0,15% de HCl de 20° Bé du poids total de l'émulsion.

On utilise habituellement de 0,1 à 0,3% et de préférence 0,2% de chlorure de calcium du poids total de l'émulsion.

L'émulsion de bitume selon l'invention présente de nombreux avantages.

Elle permet de baisser le coût de transport en évitant de transporter une grande quantité d'eau.

En outre, l'émulsion selon l'invention présente une bonne viscosité évitant tout écoulement lors du répandage, une bonne adhésivité et une rupture rapide, quelle que soit la température extérieure, à condition qu'elle soit positive.

L'émulsion conforme à l'invention est particulièrement intéressante dans la mesure où elle permet d'appliquer l'enduit en monocouche au lieu du bi-couche généralement préconisé pour les émulsions.

L'émulsion selon l'invention présente également une finesse de dispersion assurant une bonne conservation au stockage.

L'invention est illustrée par les 5 exemples non limitatifs ci-après, résumés sous forme de tableau.

Chaque exemple illustre une émulsion ou une dispersion aqueuse de bitume constituée d'un milieu organique ou liant et d'un milieu aqueux.

Le liant comporte le bitume et une solution-mère de copolymère dans un solvant.

Néanmoins, il est possible d'incorporer le copolymère directement dans le bitume au moyen d'un malaxeur sans passer par la solution-mère.

Le milieu aqueux comporte l'émulsifiant, un acide (ici HCl) et un sel (ici $CaCl_2$).

Les solutions-mère I et II, le copolymère et l'émulsifiant utilisés dans les exemples, ont la composition suivante.

Solution mère I :

90% de solvant pétrolier, par exemple celui vendu sous la marque "FLUXOTAL" par TOTAL FRANCE, dont au moins 90% en poids distille entre 160 et 360° C.
10% de copolymère styrène-butadiène-styrène (SBS).

Solution mère II :

20% de copolymère styrène-butadiène-styrène (SBS), les 80% restants sont constitués par moitié de solvant FLUXOTAL et par moitié du solvant pétrolier spécifique FLUIPRENE, par exemple N° 4 ou EXAROL, par exemple N° 11, préparés par TOTAL FRANCE pour SCR, dont 40 à 60% en poids distille en-dessous de 260° C et le restant distille au-dessus de 350° C.
Le copolymère SBS est un copolymère séquencé à structure radiale, polymérisé en solution avec une proportion butadiène/styrène 70/30.
L'émulsifiant est une alkylpropylènediamine à chaîne alkyle en $C_{13}$-$C_{15}$.

En remplaçant dans l'émulsifiant ci-dessus la chaîne alkyle en $C_{13}$-$C_{15}$ par une chaîne alkyle dérivée du suif, on obtient des émulsions ayant des propriétés similaires.

| EXEMPLES | 1 | 2 | 3 | 4 | 5 |
|---|---|---|---|---|---|
| FORMULE | % en poids du liant | | | | |
| Liant (Milieu organique) | | | | | |
| - Bitume 180 220 | 100 | 98 | 98 | 96 | 98 |
| - Solution mère I à 10% de copolymère SBS | - | 2 | 2 | 4 | |
| - Solution mère II à 20% de copolymère SBS | | | | | 2 |
| - % poids copolymère:liant | 0% | 0,2% | 0,2% | 0,4% | 0,41% |
| Milieu aqueux | % du poids total de l'émulsion | | | | |
| - Emulsionnant | 0,12 | 0,12 | 0,12 | 0,12 | 0,12 |
| - HCl | 0,14 | 0,14 | 0,14 | 0,14 | 0,14 |
| - $CaCl_2$ | 0,20 | 0,20 | 0,20 | 0,20 | 0,20 |
| CARACTERISTIQUES | | | | | |
| - Teneur en liant (%) | 72,0 | 72,0 | 79,2 | 79 | 80,4 |
| - pH | 3,7 | 3,8 | 3,7 | 3,6 | 3,7 |
| - Diamètre moyen (microns) | 13.5 | 12,2 | 13.4 | 9,6 | 9,8 |
| - Pseudo viscosité STV 25° -10 mm (secondes poises) | | | 36 140 | 20 80 | 7,5/30 |
| - Pseudo viscosité STV 25° -4 mm (secondes/centipoises) | 54/697 | 12 150 | | | |
| - Pseudo viscosité STV 60° -4 mm (secondes/centipoises) | | | 20/263 | 18/237 | 16/211 |
| - Stabilité à la décantation à 60° C | | | 4,3 | 4,8 | 4,0 |
| - Indice de rupture LCPC | 71 | 79 | 63 | 62 | 66 |
| - Résidu à la filtration - 0,63 mm (%) | traces | traces | 0,08 | 0,03 | traces |
| - Finesse de dispersion - 0,16 mm (%) | | | 0,32 | 0,13 | 0,09 |
| Adhésivité (NFT 66-018 - émulsions à stockage limité) | | | | | |
| - 1ère partie de l'essai | | | 90 | 90 | 90 |
| - 2ème partie de l'essai (comptenu des fortes viscosités. l'émulsion est versée dans ce cas sur les gravillons | | | 75 | 75 | 75 |

## CARACTERISTIQUES

(a) La pseudo-viscosité STV est mesurée à 25° C et à 60° C, le diamètre de l'orifice d'écoulement étant de 4 ou de 10 mm.

(b) La stabilité à la décantation à 60° C exprime une stabilité au stockage.

Cette mesure est réalisée d'après le test RLE-AC-4-1965.

On utilise une éprouvette graduée de 500 ml bouchée à l'émerie, comportant deux tubulures latérales, l'une placée à la partie supérieure de l'éprouvette et à une hauteur telle que l'ouverture de cette tubulure laisse sortir un volume de 40 ml.

La deuxième tubulure est placée du côté opposé de l'éprouvette à la partie inférieure de celle-ci et à une hauteur telle qu'après l'ouverture de cette tubulure, 40 ml de volume restent encore dans l'éprouvette.

L'échantillon d'émulsion est filtré sur tamis ayant une ouverture de 0,63 mm.

Les tubulures latérales étant obturées, on introduit dans l'éprouvette 500 ml d'émulsion. On bouche l'éprouvette. Après 7 jours au repos, on débouche l'éprouvette et on ouvre la tubulure latérale supérieure.

On recueille 40 ml d'émulsion. On débouche ensuite la tubulure latérale inférieure, on laisse s'écouler toute l'émulsion à l'exception de 40 ml qui restent au fond de l'éprouvette. On recueille ensuite ces 40 ml restant au fond de l'éprouvette en inclinant celle-ci. On détermine la teneur en eau des deux prélèvements.

Si a est la teneur en eau des 40 ml prélevés à la partie supérieure, b celle des 40 ml prélevés à la partie inférieure, la stabilité à la décantation est donnée par la formule S = a - b.

(c) L'indice de rupture est déterminé d'après la norme AFNOR T 66-017.

On détermine le poids en g de fine siliceuse qui provoque la rupture de 100 g d'émulsion.

L'indice de rupture I est donné par la formule :

$I = \frac{m}{E} \times 100$

où

E est la masse d'émulsion,

m est la masse de fine silicieuse.

(d) L'adhésivité est déterminée par la norme AFNOR T 66-018.

On détermine l'adhésivité de l'émulsion cationique de bitume vis-à-vis d'un granulat de référence en présence d'eau.

L'adhésivité est exprimée par une note correspondant au pourcentage de surface du granulat recouverte d'un film de bitume. Si le granulat est entièrement recouvert de bitume, l'adhésivité est égale à 100. Si le bitume est séparé du granulat, elle est égale à 0.

## COMPARAISON DES EXEMPLES

La comparaison des exemples 1 et 2 montre que pour une teneur en liant de 72% en poids, la présence du copolymère SBS permet d'abaisser de façon significative la viscosité de l'émulsion qui passe de 54 à 12 secondes STV, 4 mm, 25° C, soit de 697 à 150 centipoises.

La comparaison des exemples 3 et 4 montre que l'augmentation de la teneur en copolymère de 0,2 à 0,4% permet de diminuer le diamètre moyen des micelles de bitume de 13,4 à 9,6 microns et permet de baisser la viscosité de 36 à 20 secondes STV, 10 mm, 25° C, soit de 140 à 80 poises.

L'exemple 5 préparé à partir d'une solution-mère à 20% de copolymère, contient moins de solvant et permet d'atteindre une teneur en liant de 80,4%, soit 80,24% en poids de bitume du poids total de l'émulsion.

On constate que cette émulsion 5 a une bonne stabilité à la décantation à 60° C et par conséquent une bonne aptitude au stockage et un indice de rupture correct.

L'exemple 5 illustre plus particulièrement l'invention et indique qu'on peut obtenir, selon l'invention, une émulsion de bitume ayant les qualités habituellement requises pour une émulsion de répandage et ceci pour une teneur en bitume égale ou supérieure à 80% en poids.

On constate également que l'utilisation combinée d'un polymère en une quantité inférieure à 0,5% du poids du liant avec un émulsifiant alkylpropylène diamine à chaîne alkyle en $C_{12}$-$C_{18}$ ou en $C_{13}$-$C_{15}$ ou dérivé du suif, permet la préparation d'une émulsion de bitume ayant une teneur en bitume égale ou supérieure à 79% et même supérieure à 80% en poids et présentant une viscosité supérieure à 5 poises à 25° C et pouvant atteindre des valeurs 8 à 10 fois supérieures à celles des émulsions de bitume normalisées classiques dont la viscosité ne dépasse généralement pas 3 poises.

Cette viscosité élevée permet d'obtenir une répartition transversale et longitudinale régulière et non évolutive, assurant l'obtention d'un revêtement homogène et permettant la réalisation d'un revêtement de bonne qualité par application mono-couche au lieu de bi-couche.

L'invention a également pour objet un procédé de préparation d'une émulsion ou d'une suspension cationique de bitume, consistant à mélanger :

(I) une phase organique (milieu organique) chauffée au moins à 125-130° C et contenant (a) le bitume, (b) un copolymère styrène-butadiène et éventuellement (c) un solvant constitué de coupes pétrolières, d'huiles de houille ou de leur mélange, avec

(II) une phase aqueuse (milieu aqueux) chauffée au moins à 30° C et contenant (d) un émulsifiant, caractérisé par le fait :

- que la teneur en bitume est supérieure à 72%, avantageusement supérieure à 75% en poids et de préférence égale ou supérieure à 80% en poids du poids total de l'émulsion ou de la suspension;
- que la phase organique ou liant a une teneur en polymère inférieure à 1,5%, avantageusement inférieure à 0,5% en poids du poids du liant, cette teneur étant de préférence comprise entre 0,2 et 0,5% en poids du poids du liant;

- que la phase aqueuse contient comme émulsifiant de 0.1 à 1% et de préférence de 0.1 à 0.15% en poids (du poids total de l'émulsion) d'une amine et de préférence d'une alkylpropylènediamine à chaîne alkyle en $C_{12}$-$C_{18}$ ou en $C_{13}$-$C_{15}$ ou dérivé du suif.

Plusieurs modes opératoires sont possibles pour préparer le liant, notamment :

1 on prépare au préalable une solution-mère en dissolvant le copolymère dans le solvant ou le mélange de solvants, puis on mélange dans un malaxeur la solution-mère et le bitume;

2 le bitume et le copolymère sont malaxés ensembles en l'absence de solvant.

Le liant constituant la phase organique est émulsionné dans une turbine avec la phase aqueuse comprenant l'émulsifiant, l'acide et le sel et éventuellement le solvant.

3, le bitume et la solution-mère sont mélangés en ligne à l'entrée de la turbine avec la phase aqueuse.

## Revendications

1. Emulsion ou dispersion cationique aqueuse de bitume formée d'un liant (milieu organique) renfermant du bitume, un ou plusieurs polymères et éventuellement du fluxant (solvant ou diluant constitué d'une coupe pétrolière, d'une huile de houille ou de leurs mélanges) et d'un milieu aqueux renfermant un émulsifiant cationique choisi parmi les mono-amines, les diamines, les polyamines, les amido-amines, les oxydes de telles amines, les produits de réaction de ces composés avec l'oxyde d'éthylène et/ou propylène, les sels d'ammonium quaternaires et leurs mélanges, et un acide en une quantité suffisante pour communiquer à l'émulsion un pH acide, caractérisée par le fait :
- que la teneur en bitume est égale ou supérieure à 72% en poids, avantageusement supérieure à 75% en poids et de préférence égale ou supérieure à 80% en poids du poids total de l'émulsion ou de la dispersion;
- que l'émulsion comprend des copolymères choisis parmi les copolymères styrène-butadiène-styrène, les copolymères éthylène-acétate de vinyle et leur mélange;
- que la teneur en copolymères est inférieure à 0,5% en poids, et elle est de préférence comprise entre 0,2 et 0,5% en poids du poids du liant; et
- que l'émulsion comprend un émulsifiant cationique du type amine en une quantité inférieure à 0,5% et de préférence de 0,1 à 0,15% en poids du poids total de l'émulsion.

2. Emulsion ou dispersion selon la revendication 1, caractérisée par le fait que sa teneur en bitume est supérieure à 75% en poids du poids total de l'émulsion.

3. Emulsion ou dispersion selon la revendication 1, caractérisée par le fait que sa teneur en bitume est supérieure ou égale à 80% en poids du poids total de l'émulsion.

4. Emulsion ou dispersion selon les revendications 1 à 3, caractérisée par le fait que le poids du copolymère est compris entre 0,2 et 0,5% en poids du poids du liant.

5. Emulsion ou dispersion selon les revendications 1 à 4, caractérisée par le fait qu'on utilise un émulsifiant de formule :

$R_3$-NH-$(CH_2)_3$-$NH_2$

ou

$R_3$-NH-$[(CH_2)_3$-$NH]_r$-$(C_nH_{2n})$-$NH_2$

où $R_3$ désigne un radical alkyle ou alkényle en $C_{12}$-$C_{18}$ ou en $C_{13}$-$C_{15}$ ainsi que les radicaux oléyle, stéaryle, les radicaux provenant d'acides gras dérivés du suif, des huiles de coco ou de palmiste; r désigne le nombre 1, 2 ou 3 et n est un nombre entier de 1 à 8 et de préférence de 2 à 4.

6. Emulsion ou dispersion selon la revendication 5, caractérisée par le fait que l'émulsifiant est une alkylpropylènediamine, la chaîne alkyle étant dérivée des acides gras du suif.

7. Emulsion ou dispersion selon la revendication 5, caractérisée par le fait que l'émulsifiant est une alkylpropylènediamine à chaîne alkyle en $C_{12}$-$C_{18}$ ou en $C_{13}$-$C_{15}$.

8. Emulsion ou dispersion selon les revendications 1 à 7, caractérisée par le fait qu'elle contient également un sel alcalin ou alcalino-terreux et de préférence le chlorure de calcium.

9. Emulsion ou dispersion selon les revendications 1 à 8, caractérisée par le fait que son pH acide est de préférence compris entre 1,5 et 5.

10. Procédé de préparation d'une émulsion ou d'une dispersion cationique aqueuse de bitume, consistant à mélanger :

(I) le milieu organique (liant) chauffé au moins à 125-130 °C et contenant (a) le bitume, (b) un copolymère styrène-butadiène-styrène ou un copolymère éthylène-acétate de vinyle ou leurs mélanges et éventuellement (c) un fluxant (solvant ou diluant) constitué de coupes pétrolières, d'huiles de houille ou de

leurs mélanges, avec

(II) le milieu aqueux chauffé au moins à 30 °C et contenant (d) un émulsifiant, caractérisé par le fait :
- que la teneur en bitume est supérieure à 72% en poids, avantageusement supérieure à 75% en poids et de préférence égale ou supérieure à 80% en poids du poids total de l'émulsion ou de la dispersion,
- que la teneur en polymère est inférieure à 0,5% en poids et de préférence elle est comprise entre 0,2 et 0,5% en poids du poids du liant, et
- on utilise un émulsifiant cationique du type amine en une quantité inférieure à 0,5% et de préférence de 0,1 à 0,15% en poids du poids total de l'émulsion.

11. Procédé selon la revendication 10, caractérisé par le fait que la teneur en bitume est supérieure à 75% en poids du poids total de l'émulsion.

12. Procédé selon la revendication 10, caractérisé par le fait que la teneur en bitume est égale ou supérieure à 80% en poids du poids total de l'émulsion.

13. Procédé selon les revendications 10 à 12, caractérisé par le fait qu'on utilise un émulsifiant de formule :

$R_3$-NH-$(CH_2)_3$-$NH_2$

ou

$R_3$-NH-$[(CH_2)_3$-$NH]_r$-$(C_nH_{2n})$-$NH_2$

où $R_3$ désigne un radical alkyle ou alkényle en $C_{12}$-$C_{18}$ ou en $C_{13}$-$C_{15}$, le radical oléyle, le radical stéaryle, les radicaux provenant d'acides gras dérivés du suif, des huiles de coco ou de palmiste; r désigne le nombre 1, 2 ou 3 et n est un nombre entier de 1 à 8 et de préférence de 2 à 4.

14. Procédé selon les revendications 10 à 13, caractérisé par le fait que l'émulsifiant est un alkylpropylènediamine dont la chaîne alkyle est en $C_{12}$-$C_{18}$ ou en $C_{13}$-$C_{15}$ ou dérive des acides gras du suif.

15. Procédé selon les revendications 10 à 14, caractérisé par le fait que la phase aqueuse contient également un acide et de préférence HCl en une quantité suffisante pour communiquer à l'émulsion ou à la dispersion un pH compris entre 1,5 et 5, ainsi qu'un sel alcalin ou alcalino-terreux et de préférence $CaCl_2$.

16. Procédé de réalisation d'un revêtement routier, caractérisé par le fait que l'on applique sur la chaussée une émulsion ou une dispersion telle que définie dans l'une quelconque des revendications 1 à 9, à une température d'épandage inférieure à la température d'ébullition de l'eau.

Office européen des brevets

# RAPPORT DE RECHERCHE EUROPEENNE

Numero de la demande

EP 89 40 2436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 565 842 (A.C. PITCHFORD) * Revendications 1-5,8; colonne 5, lignes 43-48; colonne 4, lignes 45-56; colonne 3, lignes 58-61; colonne 7, lignes 15-22 * | 1,4,5,9,10,13 | C 08 L 95/00 |
| X | US-A-3 026 266 (E.W. MERTENS) * Revendications 1-10; colonne 4, lignes 15-21 * | 1 | |
| X | GB-A-1 083 453 (I.B.E LTD) * Revendications 1,2,4; page 1, lignes 75-80; page 2, lignes 4-5 * | 1 | |

DOMAINES TECHNIQUES RECHERCHES (Int. Cl.5)

C 08 L

Le présent rapport a été établi pour toutes les revendications

| Lieu de la recherche | Date d'achèvement de la recherche | Examinateur |
|---|---|---|
| LA HAYE | 17-11-1989 | BUSCAGLIONE Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 89 40 2436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 565 842 (A.C. PITCHFORD)<br>* Revendications 1-5,8; colonne 5, lignes 43-48; colonne 4, lignes 45-56; colonne 3, lignes 58-61; colonne 7, lignes 15-22 *<br>--- | 1,4,5,9,10,13 | C 08 C 195/00 |
| X | US-A-3 026 266 (E.W. MERTENS)<br>* Revendications 1-10; colonne 4, lignes 15-21 *<br>--- | 1 | |
| X | GB-A-1 083 453 (I.B.E LTD)<br>* Revendications 1,2,4; page 1, lignes 75-80; page 2, lignes 4-5 *<br>----- | 1 | |

DOMAINES TECHNIQUES RECHERCHES (Int. Cl.5)

C 08 L

Le présent rapport a été établi pour toutes les revendications

| Lieu de la recherche | Date d'achèvement de la recherche | Examinateur |
|---|---|---|
| LA HAYE | 17-11-1989 | BUSCAGLIONE Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant